# NEUE EUROPÄISCHE PATENTSCHRIFT

(11) **EP 0 642 883 B2**
(45) Veröffentlichungstag und Bekanntmachung des Hinweises auf die Entscheidung über den Einspruch: **20.10.1999**
(45) Hinweis auf die Patenterteilung: 29.05.1996
(21) Anmeldenummer: 94109438.5
(22) Anmeldetag: 18.06.1994
(51) Int. Cl.: B23Q 11/08

(54) **Werkzeugmaschine**
Machine tool
Machine outil

(30) Priorität: 14.09.1993 DE 4331090
(43) Veröffentlichungstag der Anmeldung: 15.03.1995
(73) Patentinhaber: CHIRON-WERKE GMBH & CO. KG, 78532 Tuttlingen (DE)
(72) Erfinder: Rütschle, Eugen, D-78570 Mühlheim/Donau (DE)
(74) Vertreter: Otten, Hajo, Dr.-Ing.

(56) Entgegenhaltungen:
- EP-A- 0 310 128
- EP-A- 0 331 178
- DD-A- 248 536
- DD-A- 256 276
- DD-A- 264 183
- DE-A- 2 365 033
- DE-C- 3 805 844
- US-A- 4 742 609
- US-A- 4 999 895
- PATENT ABSTRACTS OF JAPAN vol. 14, no. 315 (M-995) (4258) 6. Juli 1990 & JP-A-02 106 247 (MAKINO MILLING) 18. April 1990
- Prospekt: Tetra Mill, "Das mehrspindelige Fertigungssystem", Heckler & Koch Maschinen- und Anlagenbau GmbH,1991

## Beschreibung

Die Erfindung betrifft eine Werkzeugmaschine mit einem Spindelstock und einem Werkstücktisch, bei dem ein erster Bereich als Bearbeitungsseite für erste Werkstücke zum Bearbeiten mittels eines Werkzeuges vorgesehen ist und bei dem ein zweiter Bereich als Bestückungsseite vorzugsweise während des Bearbeitens der ersten Werkstücke mit zweiten Werkstücken bestückbar ist, wobei die beiden Bereiche durch in Richtung einer ersten Koordinate des Werkstücktisches erfolgende relative Lageveränderung zwischen dem Spindelstock und dem Werkstücktisch vertauschbar sind und ferner zwischen den Bereichen eine Spritzschutzwand vorgesehen ist, die sich in Richtung einer zweiten Koordinate in etwa senkrecht zu der ersten Koordinate erstreckt.

Eine derartige Werkzeugmaschine ist in der DE-PS 38 05 844 beschrieben, gemäß der Spindelstock und Werkstücktisch in Längsrichtung des Werkstücktisches relativ zueinander verfahrbar sind. Bei diesem relativen Verfahren wird die Spritzschutzwand jeweils umgeklappt, so daß der Werkstücktisch asymmetrisch in eine größere Bearbeitungsseite und eine entsprechend kleinere Bestückungsseite aufgeteilt wird. Auf diese Weise kann während des Bearbeitens eines Werkstückes auf der Bearbeitungsseite ein neues Werkstück auf der Bestückungsseite aufgespannt werden, wobei die Spritzschutzwand das Bedienungspersonal vor spritzendem Bohrwasser oder herumfliegenden Bohrspänen etc. schützt.

Während des relativen Verfahrens, das entweder von dem Spindelstock oder von dem Werkstücktisch durchgeführt werden kann, muß die Spindel jedoch ganz in Richtung der zweiten Koordinate zurückgefahren werden, um nicht mit ihrem über den Werkstücktisch ragenden Bereich mit der Spritzschutzwand zu kollidieren.

Bei dieser Werkzeugmaschine ist von Nachteil, daß der Spindelstock vor dem relativen Verfahren ganz aus dem Bereich des Werkstücktisches herausgefahren werden muß. Damit ist nicht nur ein großer Zeitaufwand verbunden, der die Werkstückwechselzeit nachteilig beeinflußt, vielmehr muß auch "hinter" der Werkzeugmaschine entsprechender Platz vorgesehen sein, um den zurückfahrenden Spindelstock aufnehmen zu können. Wegen der langen Führungsbahnen des Spindelstockes ist auch der konstruktive Materialaufwand groß, was zu hohen Kosten führen kann.

Eine ähnliche Werkzeugmaschine ist aus der DE-PS 38 05 842 bekannt, bei der der Werkstücktisch jedoch um eine Hochachse drehbar ist. Auch hier wird zur Kollisionsvermeidung der Spindelstock aus dem Bewegungsraum der Spritzschutzwand herausgefahren, bevor der Werkstücktisch verdreht wird. Die ebenfalls klappbar ausgebildete Spritzschutzwand erstreckt sich hier nicht über die gesamte Breite des Werkstücktisches, so daß die oben diskutierten Nachteile hier geringer sind. Dafür ergibt sich hier jedoch der weitere Nachteil, daß keine vollständige Abtrennung zwischen Bearbeitungsseite und Bestückungsseite möglich ist, so daß das Bedienungspersonal durch Reste des Bohrwassers und ggf. auf die Bestückungsseite gelangende Späne behindert und ggf. verletzt werden kann.

Andere, ebenfalls bekannte Werkzeugmaschinen, bei denen die Spritzschutzwand ggf. feststehend ausgebildet ist, sehen Aussparungen in der Spritzschutzwand vor, die der bei dem Verfahren noch über den Werkstücktisch ragenden Silhouette des Spindelstockes entsprechen. Da es hier nicht mehr erforderlich ist, den Spindelstock ganz aus dem Bereich des Werkstücktisches herauszufahren, kann gegenüber den oben diskutierten Werkzeugmaschinen zwar die Werkstückwechselzeit reduziert werden, wegen der Aussparungen ist jedoch die Gefahr der Behinderung durch herüberspritzendes Bohrwasser und/oder Späne deutlich größer.

Aus der DD 256 276 A1 ist noch eine Arbeitsraumabschirmung bekannt, die teleskopartig verfahrbare, plattenförmige Wandelemente umfaßt.

Ausgehend von diesem Stand der Technik ist es Aufgabe der vorliegenden Erfindung, eine Werkzeugmaschine zu schaffen, die bei kleiner Werkstückwechselzeit und platzsparender, einfacher Konstruktion doch für eine gute Abdichtung zwischen der Bearbeitungsseite und der Bestückungsseite des Werkstücktisches sorgt.

Bei der eingangs genannten Werkzeugmaschine wird diese Aufgabe erfindungsgemäß dadurch gelöst, daß die Spritzschutzwand in Richtung der zweiten Koordinate derart zumindest abschnittsweise längenveränderlich ausgebildet ist, daß sie sich während der Bearbeitung eines Werkstückes über ihre volle Länge in Richtung der zweiten Koordinate erstreckt und bei einer relativen Lageveränderung zwischen Werkstücktisch und Spindelstock ihre in Richtung der zweiten Koordinate verkürzte Stellung einnimmt, wobei zumindest der längenveränderliche Teil aus dem Bereich des sich relativ zu der Spritzschutzwand bewegenden Spindelstockes herausbewegt ist.

Die der Erfindung zugrunde liegende Aufgabe wird auf diese Weise vollkommen gelöst. Weil jetzt nämlich die Spritzschutzwand aus dem Bereich des sich relativ zu ihr bewegenden Spindelstockes herausbewegt wird und nicht umgekehrt, kann bei dieser Bewegung wegen der sehr viel geringeren zu bewegenden Masse - Teil der Spritzschutzwand statt des Spindelstockes oder des Werkstücktisches - ein sehr viel schnellerer Wechsel zwischen Bestückungsseite und Bearbeitungsseite erfolgen. Darüber hinaus ist diese Konstruktion platzsparend, denn der zusätzliche Raum hinter der Werkzeugmaschine, in dem sich bei den Werkzeugmaschinen aus dem Stand der Technik der Spindelstock bewegen muß, ist nicht mehr erforderlich. Während der Bearbeitung eines Werkstückes ist die Spritzschutzwand vollständig "ausgefahren", so daß Bearbeitungsseite und Bestückungsseite vollständig gegeneinander abgedichtet sind. Da keine Aussparungen etc. mehr erforderlich sind, können somit weder Bohrwasser noch Späne von der Bearbeitungsseite auf die Bestückungsseite gelangen. Auch der Materialaufwand ist gering, da kürzere Führunngsschienen für den Spindelstock vorgesehen werden können.

Insgesamt arbeitet die neue Werkzeugmaschine so, daß während der Bearbeitung eines Werkstückes die Spritzschutzwand sich über ihre volle Länge in Richtung der zweiten Koordinate erstreckt, während sie bei der relativen Lageveränderung, sei es durch Drehen des Werkstücktisches oder lineares Verfahren zwischen Spindelstock und Werkstücktisch, ihre verkürzte Stellung einnimmt, indem zumindest der längenveränderliche/verschiebbare Teil eingefahren wird. Da die Spritzschutzwand sehr viel schneller zusammengefahren als der Spindelstock zurückgefahren werden kann, wird die Werkstückwechselzeit um diese Zeitdifferenz verkürzt.

In einem Ausführungsbeispiel ist es bevorzugt, wenn die Spritzschutzwand in Richtung der zweiten Koordinate zumindest abschnittsweise teleskopierbar ausgebildet ist.

Hier ist von Vorteil, daß die Längenveränderung der Spritzschutzwand auf mechanisch einfache Weise erreicht wird. Diese Maßnahme ist ferner auch im Hinblick auf die Platzanforderungen von Vorteil, die eingefahrene Spritzschutzwand benötigt nicht mehr Raum als die ausgefahrene.

Weiterhin ist es bevorzugt, wenn die Spritzschutzwand ein erstes, mit dem Werkstücktisch verbundenes Wandteil, sowie ein zweites Wandteil umfaßt, das gegenüber dem ersten Wandteil in Richtung der zweiten Koordinate verschiebbar ist.

Diese Maßnahme ist insbesondere unter konstruktiven Aspekten von Vorteil, es muß lediglich ein verschiebbares Wandteil bzw. ein entsprechender Abschnitt vorgesehen sein, um die Längenveränderlichkeit der Spritzschutzwand zu bewirken. Da dieses zweite Wandteil mit geringem Gewicht ausgelegt werden kann, ergibt sich nochmals eine Verringerung der Werkstückwechselzeit.

Dabei ist es bevorzugt, wenn das erste Wandteil eine Doppelwand mit einem Zwischenraum ist, in dem das zweite Wandteil verschiebbar ist.

Bei dieser Maßnahme ist von Vorteil, daß auch die Verschiebemechanik selbst vor Spritzwasser geschützt wird. Dies führt zu einer größeren Betriebssicherheit der Werkzeugmaschine und gewährleistet außerdem eine platzsparende, einfach Konstruktion. Das sich in dem Zwischenraum verschiebende zweite Wandteil benötigt im eingefahrenen Zustand keinen weiteren Raum, so daß auch die Bautiefe der Werkzeugmaschine positiv beeinflußt wird. Da das zweite Wandteil auch im ausgefahrenen Zustand noch teilweise von der Doppelwand beidseitig umgriffen wird, kann das zweite Wandteil selbst in Leichtbauweise z.B. aus einem durchsichtigen Material wie Plexiglas gefertigt werden, so daß beim Verschieben dieses Wandteiles nur sehr geringe Massen bewegt werden müssen. Auch dies führt dazu, daß die Zeitspanne zwischen der Bearbeitung zweier aufeinanderfolgender Werkstücke sehr gering gehalten wird.

Ferner ist es bevorzugt, wenn eine mit dem zweiten Wandteil verbundene Kolben-Zylinder-Anordnung vorgesehen ist, welche die Verschiebung des zweiten Wandteiles bewirkt.

Diese Maßnahme ist wieder unter konstruktiven Gesichtspunkten sowie im Hinblick auf die gewünschte Zeitersparnis von Vorteil. Durch die Kolben-Zylinder-Anordnung wird das zweite Wandteil nämlich lediglich zwischen seinen beiden Grenzlagen verschoben, eine komplizierte Bewegungssteuerung ist nicht erforderlich. Auf diese Weise wird sichergestellt, daß unmittelbar nach dem Ende der Bearbeitung des ersten Werkstückes die relative Verfahrbewegung zwischen Spindelstock und Werkstücktisch eingeleitet werden kann, während parallel die Kolben-Zylinder-Anordnung betätigt wird, um das zweite Wandteil zurückzuziehen. Diese Bewegung des zweiten Wandteiles erfolgt so schnell, daß keine weiteren Wartezeiten zur Sicherheit vorgesehen werden müssen. Die gesamte Werkstückwechselzeit wird damit lediglich durch die Verfahrgeschwindigkeit zwischen Spindelstock und Werkstücktisch selbst festgelegt.

Dabei ist es bevorzugt, wenn das erste Wandteil einen unteren Abschnitt umfaßt, der sich in Richtung der zweiten Koordinate im wesentlichen über den Werkstücktisch in seiner gesamten Tiefe in dieser Richtung erstreckt, wobei das erste Wandteil eine L-Form aufweist.

Bei dieser Maßnahme ist von Vorteil, daß die neue Spritzschutzwand auch bei bestehenden Werkzeugmaschinen eingesetzt werden kann. Dazu ist lediglich die bisherige Spritzschutzwand abzubauen und die neue Spritzschutzwand mit dem "unteren Teil des L" an den Werkstücktisch zu montieren. Das zweite Wandteil verschließt dabei den ausgeklinkten Abschnitt des L's, wenn jenes ganz ausgefahren ist.

Insgesamt ist es hier bevorzugt, wenn zum Zwecke der relativen Lageveränderung entweder die Spindel oder der Werkstücktisch in der ersten Koordinate längs verfahrbar ist, oder wenn der Werkstücktisch in Richtung der ersten Koordinate schwenkbar ist.

Durch die Maßnahmen werden auf vorteilhafte Weise alle Möglichkeiten umfaßt, mit denen die relative Lageveränderung realisierbar ist.

Die Erfindung ist in der Zeichnung dargestellt und wird in der nachfolgenden Beschreibung näher erläutert. Es zeigen:
- Fig. 1: eine Draufsicht auf eine schematisch dargestellte neue Werkzeugmaschine mit ausgefahrener neuer Spritzschutzwand, in einem ersten Ausführungsbeispiel;
- Fig. 2: eine Darstellung wie Fig. 1, jedoch mit eingefahrener Spritzschutzwand;
- Fig. 3: eine schematische Seitenansicht der neuen Spritzschutzwand gemäß Fig. 1;
- Fig. 4: eine Draufsicht auf eine schematisch dargestellte neue Werkzeugmaschine in einem zweiten Ausführungsbeispiel; und
- Fig. 5: in einer Darstellung wie Fig. 3 ein zweites Ausführungsbeispiel der neuen Spritzschutzwand.

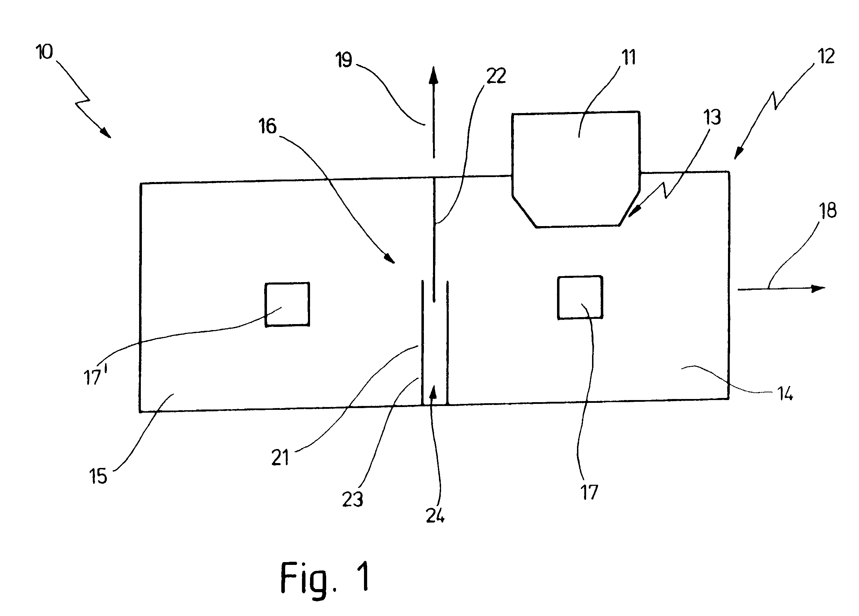

In Fig. 1 ist schematisch in einer Draufsicht eine Werkzeugmaschine 10 gemäß einem ersten Ausführungsbeispiel der Erfindung gezeigt. Die Werkzeugmaschine 10 ist eine Langbettwerkzeugmaschine mit einem Spindelstock 11 und einem Werkstücktisch 12, wobei der Spindelstock 11 mit einem Teil seiner Silhouette 13 über den Werkstücktisch 12 ragt.

In bekannter Weise ist der Werkstücktisch 12 in eine Bearbeitungsseite 14 und eine in Fig. 1 links angedeutete Bestückungsseite 15 durch eine zwischen diesen beiden Bereichen vorgesehene Spritzschutzwand 16 aufgeteilt. Auf der Bearbeitungsseite 14 ist bei 17 ein Werkstück angedeutet, das gerade mittels eines nicht gezeigten Werkzeuges bearbeitet wird. Während dieser Bearbeitung des Werkstückes 17 kann eine Bedienungsperson auf der Bestückungsseite 15 ein zweites Werkstück 17' aufspannen, wobei die Bedienungsperson durch die neue Spritzschutzwand 16 vor auf der Bearbeitungsseite 14 herumspritzendem Bohrwasser und herumfliegenden Spänen geschützt ist.

Bei der Werkzeugmaschine 10 weist der Werkstücktisch 12 eine erste Koordinate 18 auf, die seiner Längsrichtung entspricht. Die Spritzschutzwand 16 erstreckt sich längs einer zweiten Koordinate 19 in etwa senkrecht zu der ersten Koordinate 18. Durch relatives Verfahren zwischen dem Spindelstock 11 und dem Werkstücktisch 12 längs der ersten Koordinate 18 sind die Bearbeitungsseite 14 und die Bestückungsseite 15 vertauschbar, d.h. der Spindelstock 11 befindet sich dann auf der linken Hälfte des Werkstücktisches 12, während auf der rechten Hälfte ein drittes Werkstück aufgespannt werden kann.

Selbstverständlich weist die Werkzeugmaschine 10 ein nicht dargestelltes Gehäuse auf, das die jeweilige Bearbeitungsseite so umschließt, daß Bohrwasser und Späne diesen Bereich nicht verlassen können. Aus Darstellungsgründen ist dieses Gehäuse - wie gesagt - nicht gezeigt.

In der schematischen Darstellung der Fig. 1 ist zu erkennen, daß die Spritzschutzwand 16 in Richtung der zweiten Koordinate 19 teleskopierbar ausgebildet ist. Die Spritzschutzwand 16 umfaßt zu diesem Zweck ein erstes Wandteil 21, das fest mit dem Werkstücktisch 12 verbunden ist. Ferner ist ein zweites Wandteil 22 vorgesehen, das gegenüber dem ersten Wandteil 21 verschiebbar ist. Zu diesem Zweck ist das erste Wandteil 21 als Doppelwand 23 ausgebildet, in deren Zwischenraum 24 das erste Wandteil 22 teilweise hineinragt.

Fig. 1 zeigt die Spritzschutzwand 16 in der Stellung, in der das zweite Wandteil 22 so weit aus der Doppelwand 23 herausgefahren ist, daß die Spritzschutzwand 16 sich in Richtung der zweiten Koordinate 19 über die gesamte Tiefe des Werkstücktisches 12 erstreckt. Auf diese Weise ist sichergestellt, daß weder Bohrwasser noch Späne von der Bearbeitungsseite 14 auf die Bestückungsseite 15 gelangen können.

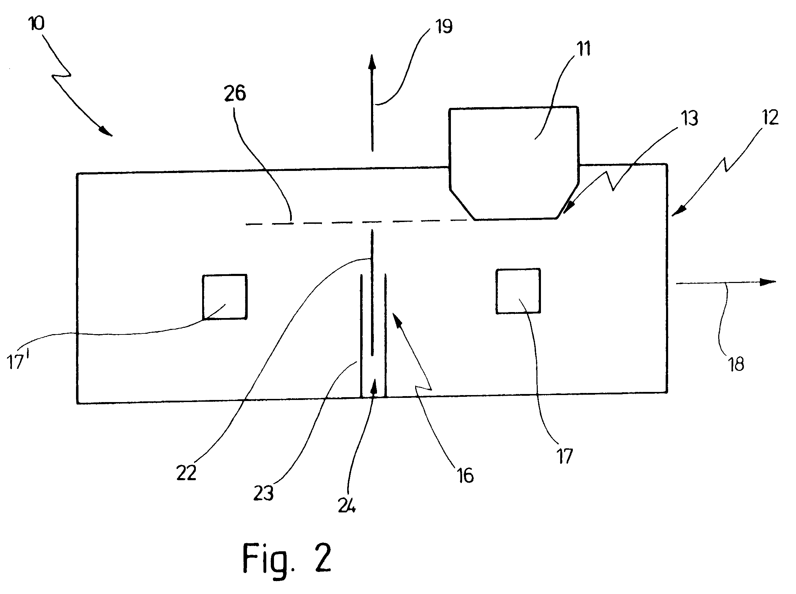

In Fig. 2 ist die Werkzeugmaschine 10 aus Fig. 1 mit eingefahrener Spritzschutzwand 16 dargestellt. Es ist zu erkennen, daß das zweite Wandteil 22 so weit in die Doppelwand 23 hineingefahren wurde, daß sich die über den Werkstücktisch 12 ragende Silhouette 13 des Spindelstockes 11 auf ihrem bei 26 angedeuteten relativen Verfahrweg ohne Kollisionsgefahr an der Spritzschutzwand 16 vorbeibewegen kann. Unmittelbar nach dem Ende der Bearbeitung des Werkstückes 17 wird das zweite Wandteil 22, das ein sehr geringes Gewicht aufweist, in die Doppelwand 23 eingezogen, so daß der Spindelstock 11 ohne größere Unterbrechung sofort in Richtung entgegen der ersten Koordinate 18 bewegt werden kann oder, alternativ, daß der Werkstücktisch 12 in Richtung dieser Koordinate 18 bewegt werden kann. Da die Masse des zweiten Wandteiles 22 deutlich geringer ist als die des Spindelstockes 11 oder des Werkstücktisches 12 wird somit die Werkstückwechselzeit deutlich reduziert. Auch ein Herumfahren z.B. des Spindelstockes 11 um eine feste, die gesamte Tiefe des Werkstücktisches 12 in Richtung der zweiten Koordinate 19 überspannende Spritzschutzwand ist unnötig, was ebenfalls zu einer geringeren Werkstückwechselzeit führt.

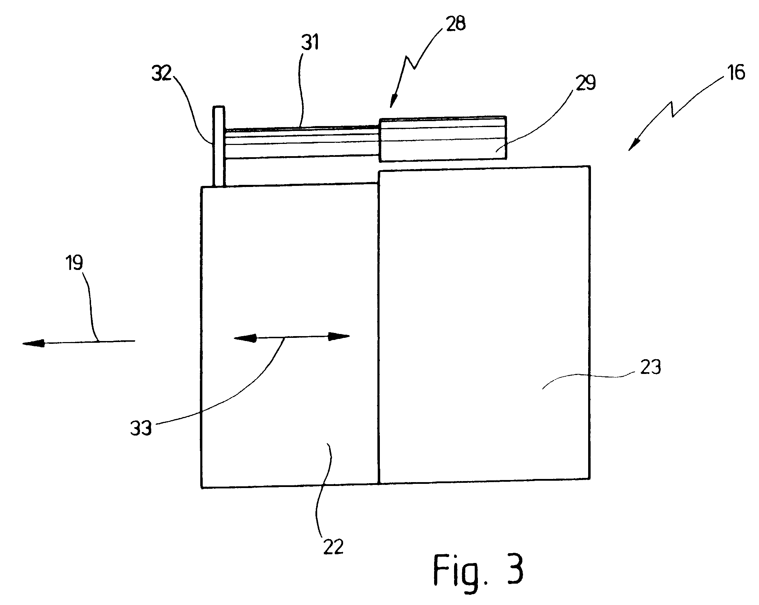

In Fig. 3 ist die neue Spritzschutzwand 12 in einer schematischen Seitenansicht dargestellt. Zum Verschieben des zweiten Wandteiles 22 in der Doppelwand 23 ist eine oberhalb der Spritzschutzwand 16 angedeutete Kolben-Zylinder-Anordnung 28 vorgesehen, welche einen Druckluftzylinder 29 und einen Kolben 31 umfaßt, der mittels einer Halterung 32 an dem zweiten Wandteil befestigt ist. Durch einfaches Einfahren bzw. Ausfahren des Kolbens 31 kann die gesamte Länge der Spritzschutzwand 16 in Richtung der zweiten Koordinate 19 verändert werden. Das zweite Wandteil 22 legt dabei einen bei 33 angedeuteten Verfahrweg zurück. Die Kolben-Zylinder-Anordnung kann so angesteuert werden, daß der Kolben 31 und damit das zweite Wandteil 22 lediglich zwischen zwei Extrempositionen hin- und herbewegt wird, eine weitere Bewegungssteuerung ist nicht erforderlich.

Abschließend sei noch bemerkt, daß durch die Aufnahme des zweiten Wandteiles 22 in dem Zwischenraum 24 der Doppelwand 23 für eine seitliche Stabilität des zweiten Wandteiles 22 gesorgt wird, das dementsprechend mechanisch einfach ausgelegt sein kann, z.B. aus einem durchsichtigen Material wie Plexiglas gefertigt werden kann. Das Gewicht dieses zweiten Wandteiles 22 ist dadurch so gering, daß seine Masse beim Beschleunigen vernachlässigt werden kann. Selbstverständlich kann auch die Doppelwand 23 aus durchsichtigem Material wie Plexiglas gefertigt sein, so daß die ein zweites Werkstück 17' aufspannende Bedienungsperson durch die somit optisch durchsichtige Spritzschutzwand 16 hindurch den Bearbeitungsablauf auf der Bearbeitungsseite 14 kontrollieren kann.

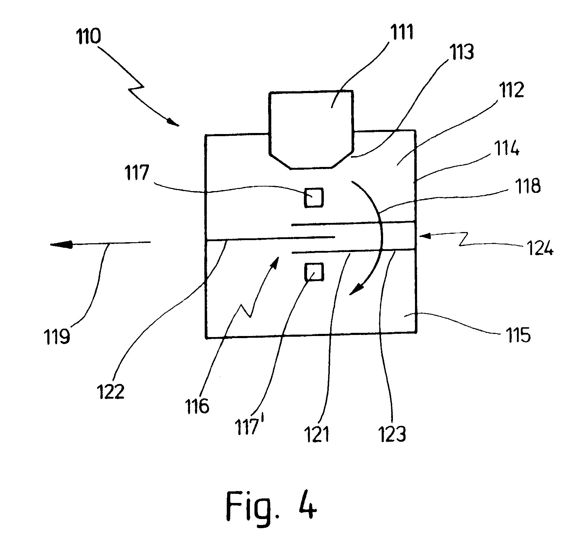

In Fig. 4 ist in einem zweiten Ausführungsbeispiel eine weitere Werkzeugmaschine 110 dargestellt, welche einen Spindelstock 111 sowie einen Werkstücktisch 112 umfaßt, über den sich der Spindelstock 111 mit seiner Silhouette 113 erstreckt. Auch dieser Werkstücktisch 112 ist in eine Bearbeitungsseite 114 und eine Bearbeitungsseite 115 aufgeteilt, wobei zwischen diesen Bereichen eine Spritzschutzwand 116 vorgesehen ist, die im Aufbau der Spritzschutzwand 16 gemäß Fig. 3 entspricht. Die Spritzschutzwand 116 schützt ebenfalls während der Bearbeitung eines ersten Werkstückes 117 eine Bedienungsperson, welche ein zweites Werkstück 117' aufspannt.

Im Gegensatz zu der Werkzeugmaschine 10 aus Fig. 1 und 2 ist der Werkstücktisch 112 in Richtung einer ersten Koordinate 118 um eine Hochachse schwenkbar bzw. drehbar, während sich die Spritzschutzwand 116 in Richtung einer zweiten Koordinate 119 senkrecht zu dieser Winkelkoordinate 118 erstreckt. In Fig. 4 ist weiter zu erkennen, daß die Spritzschutzwand 116 ein bewegliches Wandteil 122 sowie eine Doppelwand 123 aufweist, in deren Zwischenraum 124 sich das bewegliche Wandteil 122 verschiebt.

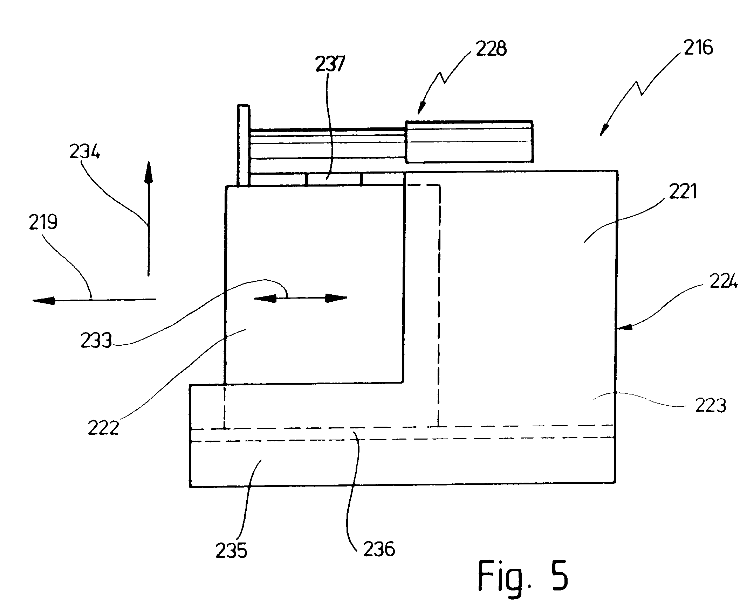

In Fig. 5 ist in einer Darstellung wie Fig. 3 die neue Spritzschutzwand in einem zweiten Ausführungsbeispiel dargestellt. Diese Spritzschutzwand 216 umfaßt ebenfalls ein erstes Wandteil 221 sowie ein zweites Wandteil 222, wobei das erste Wandteil 221 eine Doppelwand 223 ist, in deren Zwischenraum 224 sich das erste Wandteil 222 in Richtung der zweiten Koordinate 219 verschiebt. Wieder ist eine Kolben-Zylinder-Anordnung 228 vorgesehen, welche für einen bei 233 angedeuteten Verfahrweg des zweiten Wandteiles 222 sorgt.

Abweichend von Fig. 3 weist die Spritzschutzwand 216 jedoch in Richtung ihrer Höhe 234 einen weiteren festen Abschnitt 235 auf, der sich in Fig. 5 unterhalb des beweglichen zweiten Wandteiles 222 über die gesamte Tiefe des in Fig. 5 nicht gezeigten Werkstücktisches in Richtung der zweiten Koordinate 219 erstreckt. Mit anderen Worten ist das erste Wandteil 221 L-förmig ausgebildet und erstreckt sich mit seiner Basis über den gesamten Werkstücktisch in seiner Tiefe. Der jeweilige Spindelstock bewegt sich dementsprechend bei eingefahrenem zweiten Wandteil 222 oberhalb des Teiles 235 in dem bei geschlossener Spritzschutzwand 216 von dem beweglichen zweiten Wandteil 222 eingenommenen Raum.

In Fig. 1 ist mit 236 noch eine Führungsschiene angedeutet, in welcher sich das zweite Wandteil 222 bewegt. Die Spritzschutzwand 216 ist ohne weiteres gegen eine herkömmliche Spritzschutzwand mit Ausklinkung auszutauschen, da die Führung 236 sowie die Kolben-Zylinder-Anordnung 228 an der Spritzschutzwand 216 befestigt sind. Somit sind auch bestehende Werkzeugmaschinen mit der neuen Spritzschutzwand 216 nachrüstbar, ohne daß konstruktive Veränderungen an der Werkzeugmaschine selbst vorzusehen sind. Die neue Spritzschutzwand 216 ist mit gleichen Befestigungsvorrichtungen ausgerüstet wie bestehende Spritzschutzwände, so daß der Austausch problemlos möglich ist.

Im Bereich der Kolben-Zylinder-Anordnung 228 ist noch eine Teleskopführung 237 angeordnet, welche zusammen mit der Führungsschiene 236 für eine sichere Führung des zweiten Wandteiles 222 an dem L-förmigen ersten Wandteil 221 sorgt.

## Patentansprüche

1. Werkzeugmaschine (10; 110) mit einem Spindelstock (11; 111) und einem Werkstücktisch (12; 112), bei dem ein erster Bereich als Bearbeitungsseite (14; 114) für erste Werkstücke (17; 117) zum Bearbeiten mittels eines Werkzeuges vorgesehen ist und bei dem ein zweiter Bereich als Bestückungsseite (15; 115) vorzugsweise während des Bearbeitens des ersten Werkstückes (17; 117) mit zweiten Werkstücken (17'; 117') bestückbar ist, wobei die beiden Bereiche (14, 15; 114, 115) durch in Richtung einer ersten Koordinate (18; 118) des Werkstücktisches (12; 112) erfolgende relative Lageveränderung zwischen dem Spindelstock (11; 111) und dem Werkstücktisch (12; 112) vertauschbar sind und ferner zwischen den Bereichen (14, 15; 114, 115) eine Spritzschutzwand (16; 116; 216) vorgesehen ist, die sich in Richtung einer zweiten Koordinate (19; 119; 219) in etwa senkrecht zu der ersten Koordinate (18; 118) erstreckt,
dadurch gekennzeichnet,
daß die Spritzschutzwand (16; 116; 216) in Richtung der zweiten Koordinate (19; 119; 219) derart zumindest abschnittsweise längenveränderlich ausgebildet ist, daß sie sich während der Bearbeitung eines Werkstückes (17; 117) über ihre volle Länge in Richtung der zweiten Koordinate (19; 119; 219) erstreckt und bei einer relativen Lageveränderung zwischen Werkstücktisch (12; 112) und Spindelstock (11; 111) ihre in Richtung der Zweiten Koordinate (19; 119; 219) verkürzte Stellung einnimmt, wobei zumindest der längenveränderliche Teil aus dem Bereich des sich relativ zu der Spritzschutzwand (16; 116; 216) bewegenden Spindelstockes (11; 111) herausbewegt ist.

2. Werkzeugmaschine nach Anspruch 1, dadurch gekennzeichnet, daß die Spritzschutzwand (16; 116; 216) in Richtung der zweiten Koordinate (19; 119; 219) zumindest abschnittweise teleskopierbar ausgebildet ist.

3. Werkzeugmaschine nach Anspruch 1 oder Anspruch 2, dadurch gekennzeichnet, daß die Spritzschutzwand (16; 116; 216) ein erstes, mit dem Werkstücktisch (12; 112) verbundenes Wandteil (21; 121; 221), sowie ein zweites Wandteil (22; 122; 222) umfaßt, das gegenüber dem ersten Wandteil (21; 121; 221) in Richtung der zweiten Koordinate (19; 119; 219) verschiebbar ist.

4. Werkzeugmaschine nach Anspruch 3, dadurch gekennzeichnet, daß das erste Wandteil (21; 121; 221) eine Doppelwand (23; 123; 223) mit einem Zwischenraum (24; 124; 224) ist, in dem das zweite Wandteil (22; 122; 222) verschiebbar ist.

5. Werkzeugmaschine nach Anspruch 3 oder Anspruch 4, dadurch gekennzeichnet, daß eine mit dem zweiten Wandteil (22; 222) verbundene Kolben-Zylinder-Anordnung (28; 228) vorgesehen ist, welche die Verschiebung des zweiten Wandteiles (22; 222) bewirkt.

6. Werkzeugmaschine nach einem der Ansprüche 3 bis 5, dadurch gekennzeichnet, daß das erste Wandteil (221) einen unteren Abschnitt (235) umfaßt, der sich in Richtung der zweiten Koordinate (219) im wesentlichen über den Werkstücktisch in seiner gesamten Tiefe in dieser Richtung erstreckt, wobei das erste Wandteil (221) eine L-Form aufweist.

7. Werkzeugmaschine nach einem der vorhergehenden Ansprüche, dadurch gekennzeichnet, daß der Spindelstock (11) zum Zwecke der relativen Lageveränderung in der ersten Koordinate (18) längs verfahrbar ist.

8. Werkzeugmaschine nach einem der Ansprüche 1 bis 6, dadurch gekennzeichnet, daß der Werkstücktisch (12) zum Zwecke der relativen Lageveränderung in der ersten Koordinate (18) längs verfahrbar ist.

9. Werkzeugmaschine nach einem der Ansprüche 1 bis 6, dadurch gekennzeichnet, daß, der Werkstücktisch (112) zum Zwecke der relativen Lageveränderung in Richtung der ersten Koordinate (118) schwenkbar ist.

## Claims

1. Machine tool (10; 110), comprising a spindle head (11; 111) and a workpiece table (12; 112), said workpiece table providing for a first region as a machining side (14; 114) for first workpieces (17; 117) for being machined by a tool element, and providing for a second region as a loading side (15; 115) for being loaded with second workpieces (17'; 117') preferably while said first workpieces (17; 117) are being machined, said two regions (14, 15; 114, 115) being exchangeable with each other by a relative positional change between said spindle head (11; 111) and said workpiece table (12; 112) in the direction of a first coordinate (18; 118) of said workpiece table (12; 112), and a spray shielding panel (16; 116; 216) being provided between said regions (14, 15; 114, 115), said spray shielding panel extending in the direction of a second coordinate (19; 119; 219) approximately perpendicular to said first coordinate (18; 118),
characterized in that
said spray shielding panel (16; 116; 216) is configured at least in sections with a variable length in the direction of said second coordinate (19; 119; 219), such that during machining of a workpiece (17, 117) said splash guard wall extends over its full length in the direction of said second coordinate (19; 119; 219) and during a relative positional change between said workpiece table (12; 112) and said spindle head (11; 111) takes its position shortened in the direction of said second coordinate (19; 119; 219), wherein at least the variable-length part has been moved out of the region of the spindle head (11; 111) moving relativ to said splash guard wall (16; 116; 216).

2. The machine tool of claim 1, characterized in that the spray shielding panel (16; 116; 216) is configured to be at least in sections telescopic in the direction of the second coordinate (19; 119; 219).

3. The machine tool of claim 1 or claim 2, characterized in that the spray shielding panel (16; 116; 216) comprises a first panel element (21; 121; 221) connected to the workpiece table (12; 112) as well as a second panel element (22; 122; 222) that is displaceable with respect to the first panel element (21; 121; 122) in the direction of said second coordinate (19; 119; 219).

4. The machine tool of claim 3, characterized in that said first panel element (21; 121; 221) is a double panel element (23; 123; 223) with a clearance inbetween (24; 124; 224) in which the second panel element (22; 122; 222) can be displaced.

5. The machine tool of claim 3 or claim 4, characterized in that a piston-cylinder arrangement (28; 228) connected to said second panel element (22; 222) is provided for displacing the second panel element (22; 222).

6. The machine tool according to any of claims 3-5, characterized in that the first panel element (221) comprises a lower section (235) extending in the direction of said second coordinate (212) substantially over the entire depth of the workpiece table in this direction, said first panel element (221) comprising thus an L-shape.

7. The machine tool of any of the preceding claims, characterized in that said spindle head (11) is displaceable in the direction of said first coordinate (18) for the purpose of said relative positional change.

8. The machine tool of any of claims 1-6, characterized in that said workpiece table (12) is displaceable in the direction of said first coordinate (18) for the purpose of said relative positional change.

9. The machine tool of any of claims 1-6, characterized in that the workpiece table (112) can be pivoted in the direction of said first coordinate (118) for the purpose of said relative positional change.

## Revendications

1. Machine-outil (10; 110) avec une poupée (11; 111) et une table porte-pièce (12; 112), sur laquelle une première zone est prévue en tant que côté d'usinage (14; 114) pour des premières pièces (17; 117) en vue d'un usinage au moyen d'un outil et une deuxième zone peut être chargée avec des deuxièmes pièces (17'; 117'), en tant que côté de chargement (15; 115), de préférence pendant l'usinage des premières pièces (17; 117), les deux zones (14, 15; 114, 115) pouvant être interverties par un changement de position relative, entre la poupée (11; 111) et la table porte-pièce (12; 112), effectué dans la direction d'une première coordonnée (18; 118) de la table porte-pièce (12; 112), et une paroi anti-projections (16; 116; 216) étant de plus prévue entre les zones (14, 15; 114, 115), laquelle paroi s'étend dans la direction d'une deuxième coordonnée (19; 119; 219) approximativement perpendiculaire à la première coordonnée (18; 118),
caractérisée en ce que
la paroi anti-projections (16; 116; 216) est conformée de longueur variable au moins par sections dans la direction de la deuxième coordonnée (19; 119; 219) de telle sorte qu'elle s'étend sur toute sa longueur en direction de la deuxième coordonnée (29 ; 119 ; 219) au cours de l'usinage d'une pièce (17 ; 117) et qu'elle prend sa position raccourcie en direction de la deuxième coordonnée (29 ; 119 ; 219) lors d'un changement de position relative entre la table porte-pièce (12 ; 112) et la poupée (11 ; 111), au moins la pièce de longueur variable étant sortie hors de la zone de la poupée (11 ; 111) se déplaçant par rapport à la paroi anti-projections (16 ; 116 ; 216).

2. Machine-outil selon la revendication 1, caractérisée en ce que la paroi anti-projections (16; 116; 216) est conformée télescopique au moins par sections dans la direction de la deuxième coordonnée (19; 119; 219).

3. Machine-outil selon la revendication 1 ou 2, caractérisée en ce que la paroi anti-projections (16; 116; 216) comprend une première partie de paroi (21; 121; 221) reliée à la table porte-pièce (12; 112), ainsi qu'une deuxième partie de paroi (22; 122; 222) qui est mobile dans la direction de la deuxième coordonnée (19; 119; 219) par rapport à la première partie de paroi (21; 121; 221).

4. Machine-outil selon la revendication 3, caractérisée en ce que la première partie de paroi (21; 121; 221) est une double paroi (23; 123; 223) présentant un interstice (24; 124; 224), dans lequel peut coulisser la deuxième partie de paroi (22; 122; 222).

5. Machine-outil selon la revendication 3 ou 4, caractérisée en ce qu'un dispositif à piston et cylindre (28; 228) relié à la deuxième partie de paroi (22; 222) est prévu, lequel effectue le déplacement de la deuxième partie de paroi (22; 222).

6. Machine-outil selon l'une des revendications 3 à 5, caractérisée en ce que la première partie de paroi (221) comprend une section inférieure (235) qui s'étend dans la direction de la deuxième coordonnée (219), sensiblement au-dessus de la table porte-pièce sur toute sa profondeur dans cette direction, la première partie de paroi (221) présentant une forme en L.

7. Machine-outil selon l'une des revendications précédentes, caractérisée en ce que, pour la variation de longueur relative, la poupée (11) est mobile longitudinalement selon la première coordonnée (18).

8. Machine-outil selon l'une des revendications 1 à 6, caractérisée en ce que, pour la variation de longueur relative, la table porte-pièce (12) est mobile longitudinalement selon la première coordonnée (18)

9. Machine-outil selon l'une des revendications 1 à 6, caractérisée en ce que, pour la variation de longueur relative, la table porte-pièce (112) est pivotante dans la direction de la première coordonnée (118).
